Europäisches Patentamt

European Patent Office

Office européen des brevets

(19)

(11) Publication number : **0 394 011 B1**

## (12) EUROPEAN PATENT SPECIFICATION

(45) Date of publication of patent specification :
30.09.92 Bulletin 92/40

(51) Int. Cl.⁵ : **A01F 15/08**

(21) Application number : **90304141.6**

(22) Date of filing : **18.04.90**

(54) **Bale-wrapper apparatus.**

(30) Priority : **18.04.89 GB 8908686**

(43) Date of publication of application :
**24.10.90 Bulletin 90/43**

(45) Publication of the grant of the patent :
**30.09.92 Bulletin 92/40**

(84) Designated Contracting States :
**AT BE CH DE DK ES FR GB IT LI SE**

(56) References cited :
**EP-A- 0 208 034**
**EP-A- 0 234 763**
**GB-A- 2 199 012**
**US-A- 4 641 484**

(73) Proprietor : **KVERNELAND UNDERHAUG AS**
**P O BOX 70**
**N-4350 Naerbo (NO)**

(72) Inventor : **Royneberg, Erling**
**P.O. Box 70**
**N-4350 Naerbo (NO)**

(74) Representative : **Orr, William McLean et al**
**URQUHART-DYKES & LORD 5th Floor, Tower**
**House Merrion Way**
**Leeds West Yorkshire, LS2 8PA (GB)**

EP 0 394 011 B1

Jouve, 18, rue Saint-Denis, 75001 PARIS

## Description

This invention relates to a bale wrapper with a tiltable turntable to permit loading and unloading of a cylindrical bale of straw or hay.

It is known to provide a bale wrapper which is used to wrap a continuously supplied stretchable sheet of plastics film around a bale which is supported on spaced-apart rollers on a turntable, and which bale is rotated about its axis as the sheet is wrapped around it. This causes a substantially air-tight wrapping to be formed which envelopes the bale, and protects the bale from the weather so that outside storage is possible without any appreciable deterioration in the nutritional properties of the bale material.

Bale wrappers are used to wrap "big bales" of straw, and also hay, and in the latter case, by virtue of the tight wrapping which is possible, the hay can be allowed to mature to form hay silage over a period of time during storage in its wrapping.

Usually, the entire outer periphery of the bale is covered with the sheet of stretchable material by reason of the fact that the bale is rotated both about a horizontal axis by the rollers of the turntable, and also about a vertical axis by rotation of the entire turntable and bale about this vertical axis. The sheet of stretchable film is therefore supplied from a dispenser reel mounted at a fixed position on the framework of the bale wrapper.

There are type main types of bale wrapper in use at the present time, namely mobile bale wrappers which can be trailed behind a tractor to be used in a field, and bale wrappers which will be used at a fixed location e.g. in a stackyard.

One design of trailed bale wrapper, has a side mounted pick-up mechanism which enables a newly deposited bale to be automatically engaged by the pick-up mechanism as the bale wrapper is moved forwardly by the trailer, and the mechanism can then be operated to raise the bale from the ground and to deposit it onto the turntable. Wrapping of the bale then takes place, followed by rearward tilting of the turntable in order to deposit the wrapped bale on the ground. This bale wrapper is protected by British Patent No 2159489B, and equivalent foreign patents, and to which reference may be made for a fuller disclosure of the construction and operation of rotatable turntable type bale wrappers with fixed film reels (there are other versions of bale wrapper in which the bale is rotated about its own axis, while a film dispenser is caused to orbit in a horizontal plane around the rotating bale).

There are other designs of bale wrapper, and particularly stationary bale wrappers, which rely upon the use of a separate piece of equipment to load unwrapped bales onto the turntable, such as a fork lift arrangement or a spike mounted on a tractor.

The present invention is concerned with a rotating turntable type of bale wrapper and which is capable of loading an unwrapped bale onto the turntable, and to unload the bale from the turntable after wrapping, without the need for any separate piece of bale handling equipment.

According to the invention there is provided a round-bale wrapper apparatus which is capable of being mounted on or attached to a tractor and which comprises:

a main frame which is securable or attachable to the tractor;

a sub-frame adjustably mounted on the main frame for movement between a bale-wrapping position and a tipped position;

a turntable mounted on the sub-frame and adapted to receive a round bale thereon, said turntable being operative when the sub-frame is in its bale-wrapping position to rotate the bale about its axis, and the turntable itself with the bale thereon also being rotatable about a substantially vertical axis;

means for mounting a film dispenser reel on one of said frames, whereby in service film can be withdrawn from the reel to be attached to the bale and upon rotation of the bale about its axis and rotation of the turntable the film can be automatically wrapped around the bale; and,

a pick-up mechanism mounted on the sub-frame and operative, when the sub-frame is moved to its tipped position, to engage a bale lying on the ground and to move the bale into engagement with the turntable and to hold the bale against the turntable as the sub-frame is moved to its bale-wrapping position.

Thus, a bale wrapper according to the invention is able to carry out usual bale wrapping operations once the apparatus itself has lifted the bale onto the turntable. The bale wrapper apparatus is therefore particularly useful in the stackyard where wrapped bales are to be stored, though of course the bale wrapper apparatus may be used as a mobile installation operative on bales as they are deposited by a baler in the field.

The pick-up mechanism may comprise an arm pivotally mounted on an upstanding portion of the sub-frame and having a transverse bale-engaging member at its free end, the arm being movable between a bale-receiving position and a bale-holding position. Then, upon tipping of the sub-frame and with the arm in its bale-receiving position, the arm can be lowered over and partly around the bale, and upon movement of the arm to its holding position, the arm can move and then hold the bale against the turntable.

The arm may be pivoted between its two positions by a ram or other suitable arrangement.

If for safety reasons it may be desirable to provide an entirely captive engagement of the pick-up mechanism with a bale, the pick-up mechanism may comprise a cradle which can fit over and around a bale, such cradle being pivotally mounted on the sub-frame in similar manner as the pick-up arm just referred to.

Once a bale has been wrapped, it can then be unloaded using the pick-up mechanism to hold the wrapped bale while the turntable is tipped, and then release of the wrapped bale by the pick-up mechanism will allow the bale to roll gently under gravity onto the ground, or onto any stacked position.

The main frame may be a wheel-supported frame, if it should be desired to provide a bale wrapper apparatus which can be towed behind a tractor. However, it is preferred that the main frame has suitable rigid mounting points which will enable the main frame to be coupled rigidly to the usual three point hitch at the rear of a tractor, or to be front mounted on the tractor e.g. by attachment to a front mounted lift arm arrangement. In this latter case, the entire bale wrapper apparatus can be raised with a wrapped bale thereon, and then following tilting of the sub-frame the wrapped bale can roll under gravity onto the top of a growing stack of wrapped bales.

Preferably, a stand for mounting a film reel dispenser is carried by the main frame, and therefore the reel will not be tilted (and risk falling off its mounting) when the sub-frame is tilted. An automatically acting cutter arrangement may be provided to cut the length of film running between a wrapped bale and the reel when the sub-frame is tilted.

The turntable may comprise laterally spaced and parallel rollers onto which a round bale can be supported for rotation, and at least one of the rollers may have a brake mechanism operative to brake the roller when the sub-frame is tilted and thereby control the tendency for the wrapped bale to roll-off the turntable prematurely as the sub-frame commences its tilting movement.

The turntable may have a ring gear drive mechanism operative to rotate the turntable about its vertical axis, and preferably the arrangement will be such that the turntable is lined-up with the axes of the rollers extending substantially perpendicular to the general longitudinal axis of the tractor. The sub-frame can then load or unload a bale by moving the bale in a direction along this axis, and this therefore enables the driver of the tractor readily to view the progress of the operation.

A spring-loaded latch mechanism may be provided to engage the ring gear and thereby hold the turntable in a required predetermined attitude about its axis of rotation while the sub-frame is tipped, and this mechanism may be automatically disabled as the sub-frame returns to its bale-receiving position by engagement with an actuator pad or the like on the main frame with a pivot arm of the latch mechanism.

Embodiments of bale wrapper apparatus according to the invention will now be described in detail, by way of example only, with reference to the accompanying drawings, in which:

Figure 1 is a side view of a first embodiment of bale wrapper apparatus according to the invention, and showing initial engagement with a round bale lying on the ground;

Figure 2 is a side view showing an intermediate stage in the operation of loading the bale onto the apparatus;

Figure 3 is a side view showing the apparatus attached to the rear of a tractor and with the bale fully loaded thereon to undergo a bale wrapping operation;

Figure 4 is a plan view of the bale wrapper apparatus;

Figure 5 is a side view of the bale wrapper apparatus front-mounted on a tractor via a hydraulically operated lift arm arrangement; and,

Figures 6 to 10 show consecutive views corresponding respectively to Figures 1 to 5 and showing the construction and operation of a further embodiment of bale wrapper apparatus according to the invention.

A round-bale wrapper apparatus according to the invention is capable of being mounted on or attached to a tractor, and may be provided with a turntable of known construction which is capable of receiving a round bale thereon, and which is operative to rotate the bale about its axis while the turntable itself with the bale thereon is rotated about a substantially vertical axis. The turntable and roller design may be in accordance with that known from the Silawrap machine made by Underhaug, and as disclosed, for example, in more detail in British Patent No 2159489B.

A film dispenser reel is mounted on the apparatus, and in service the film can be withdrawn from the reel to be attached to the bale, and upon rotation of the bale about its axis and rotation of the turntable about its axis, the film can be automatically wrapped around the bale.

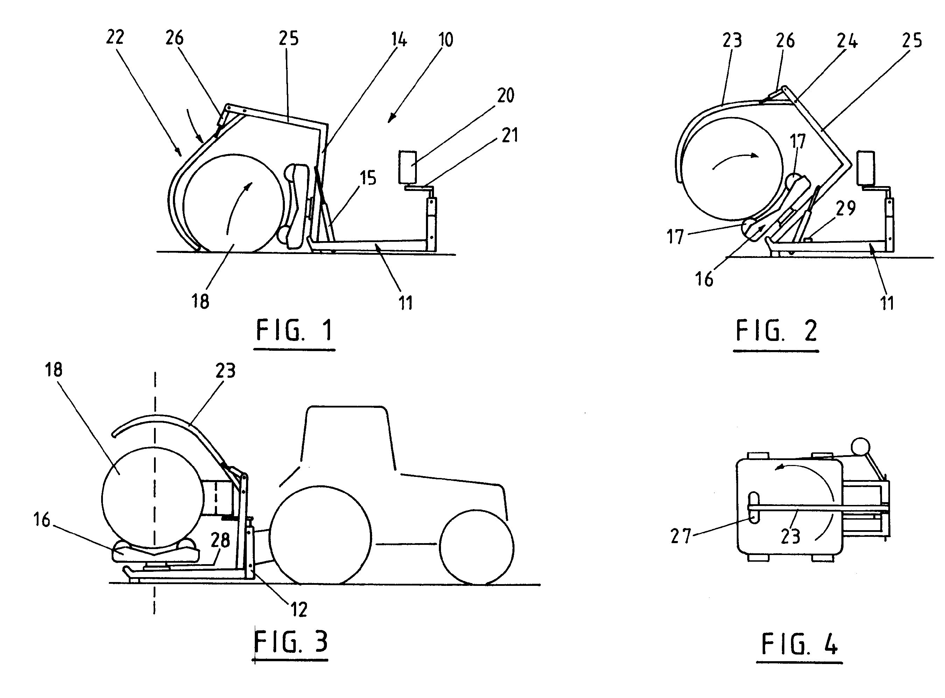

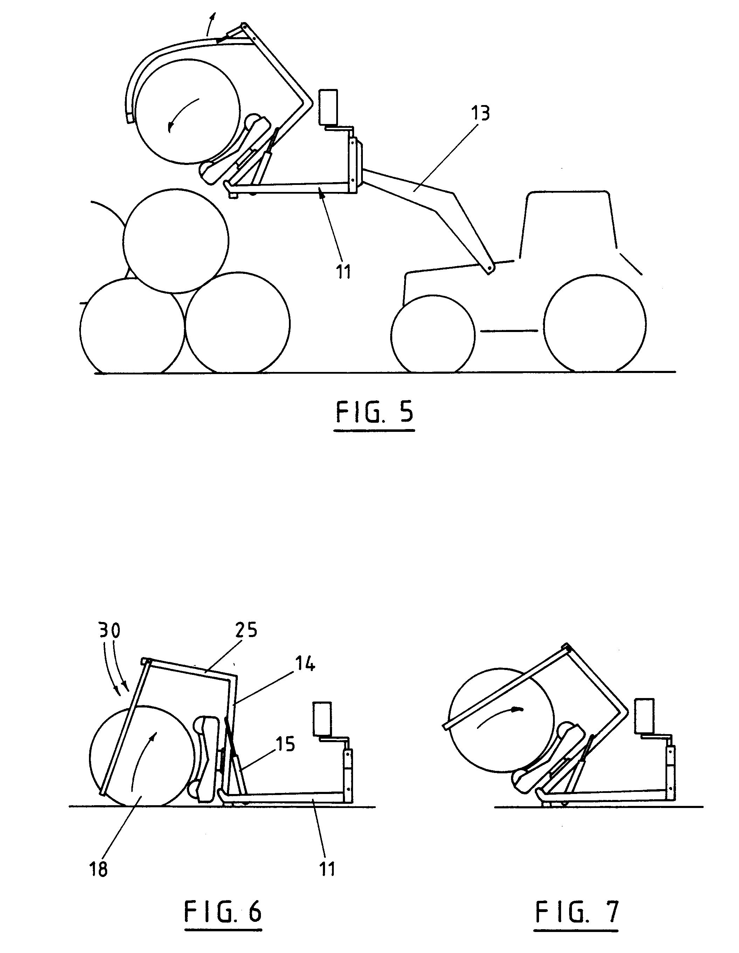

Referring now to Figures 1 to 5, the first embodiment of bale wrapper apparatus according to the invention will now be described, and which is designated generally by reference 10. The apparatus 10 has a main frame 11 which is securable to a rear mounted three point hitch 12 of a tractor, as shown in Figure 3, or which may be rigidly mounted at the front of a tractor, as shown in Figure 5, at the front ends of hydraulically operated lift arms 13.

A sub-frame 14 is adjustably mounted on the main frame 11 for movement between a bale-wrapping position, as shown in Figure 3, and a tipped position as shown in Figure 1. A ram 15 interconnects the main frame 11 and sub-frame 15, and is operative to tilt the sub-frame 14 between its two positions.

A turntable 16 having spaced apart rollers 17 is mounted on the sub-frame 14, and is operative when the sub-frame is in the bale wrapping position shown in Figure 3 to rotate a round bale 18 about its own axis while the turntable itself with the bale thereon is rotated about a substantially vertical axis 19.

A film dispenser reel 20 is mounted on one of the frames which, in the illustrated embodiment, will be the main frame 11, via a suitable support 21, and a length of film can be withdrawn from the reel to engage the bale 18, when in the position shown in Figure 3, to enable bale wrapping to take place.

A pick-up mechanism designated generally by reference 22 is mounted on the sub-frame 14 and is operative, when the sub-frame 14 is moved to its tipped position shown in Figure 1, to engage the bale 18 lying on the ground and to move the bale into engagement with the turntable 16 and to hold the bale on the turntable as the sub-frame 14 is moved to its horizontal bale-wrapping position shown in Figure 3.

The pick-up mechanism 22 in the embodiment of Figures 1 to 5 comprises an arm 23 which is pivotally mounted via a pivot 24 on an upstanding portion 25 of the sub-frame 14, and a ram 26 is operative to pivot the arm 23 between an open bale receiving and release position, as shown in Figure 3, and a bale-holding position as shown in Figures 1 and 2. Thus, upon tipping of the sub-frame 14 (assuming no bale is mounted thereon) from its position shown in Figure 3 to the position shown in Figure 1, and with the arm 23 in its bale receiving position, the arm 23 can be lowered over and partly around the bale. Then, upon movement of the arm to its holding position, the arm can move and then hold the bale 18 firmly against the turntable 16, and the latter is then tipped to the horizontal bale-wrapping portion shown in Figure 3. At the free end of the pick-up arm 23 there is provided a transverse bale engaging member 27, as shown in Figure 4.

Once the bale has been wrapped, when in the position shown in Figure 3, it can then be unloaded using the pick-up arm 23 to hold the wrapped bale initially while the turntable 14 is tipped, and then release of the wrapped bale by the arm 23 can allow the wrapped bale to roll gently under gravity onto the ground, or onto a stack, as shown in Figure 5.

The illustrated embodiment is designed to be rigidly mounted behind or in front of a tractor, via suitable rigid mounting points provided on the main frame, though the main frame may be a wheel supported frame, if it should be desired to provide a bale wrapper apparatus which can be towed behind a tractor.

The film dispenser reel 21 is mounted on a stand carried by support 21, and therefore the reel is not tilted when the sub-frame 14 is moved to its tilted position. An automatically acting cutter arrangement (not shown) may be provided to cut the length of film running between a wrapped bale and the reel 20 whenever the sub-frame is tilted.

The turntable rollers 17 are laterally spaced apart from each other and extend parallel to each other, and at least one of these rollers may have a brake mechanism operative to brake the roller when the sub-frame is tilted and thereby to control any tendency for a wrapped bale to roll off the turntable 16 prematurely as the sub-frame is tilted.

A ring gear drive mechanims, shown schematically by reference 28, is operative to rotate the turntable 16 about a substantially vertical axis, when in the bale wrapping position shown in Figure 3, and the turntable will normally be lined-up with the axes of the rollers 17 extending perpendicular to the general longitudinal axis of the tracvtor, whereby the sub-frame can load and unload a bale by moving the bale in a direction along this axis, which will enable the driver of the tractor readily to view the progress of the operation.

A spring loaded latch mechanism may be provided (not shown) to engage the ring gear 28 and thereby hold the turntable in any required predetermined attitude while the sub-frame 14 is tipped, and this mechanism may be automatically disabled as the sub-frame 14 is returned to its bale-wrapping position by engagement with an actuator pad 29 (see Figure 2) on the main frame 11 which engages with a pivot arm of the latch mechanism.

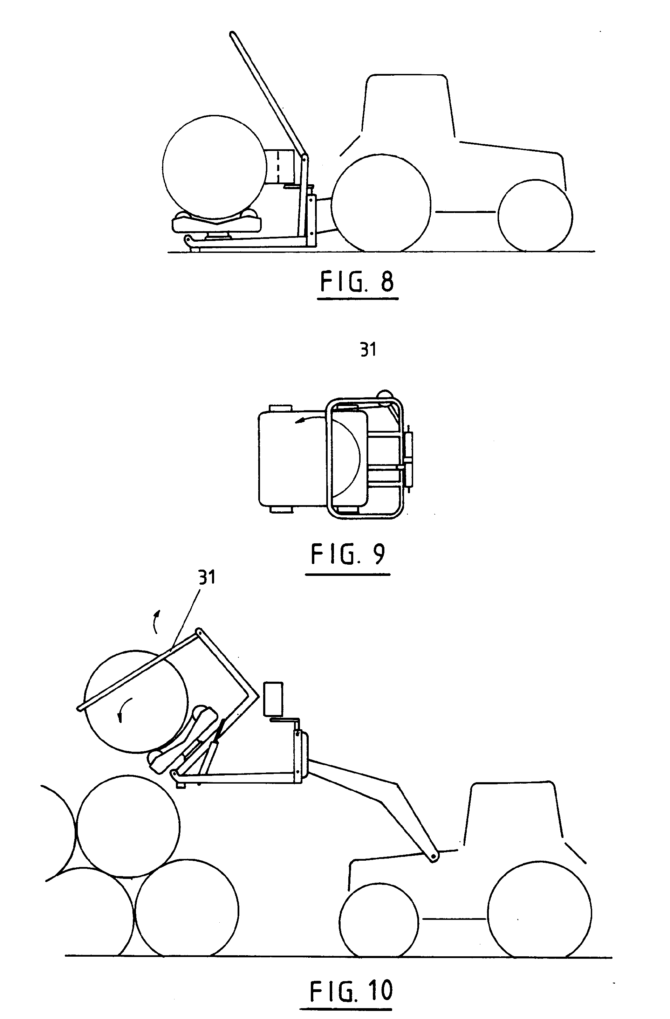

The embodiment shown in Figures 1 to 5 has a pick-up mechanism which comprises a single pick-up arm 23, as shown in Figure 4, but an alternative embodiment is shown in Figures 6 to 10, in which an alternative arrangement of pick-up mechanism is provided. Other components of the apparatus correspond with those described above for the first embodiment, and are designated by the same reference numerals, and will not be described in detail again.

The second embodiment has a pick-up mechanism designated generally by reference 30, and which comprises a U-shaped cradle 31 which can engage around and hold captive the upper portion of a bale 18, as will be evident from Figures 6 to 10. This may provide additional security against the heavy bale coming out of engagement with the pick-up mechanism, or the turntable, in the event that the bale wrapper apparatus, or a bale to be loaded and unloaded, is lying on uneven ground.

## Claims

1. A round-bale wrapper apparatus (10) which is capable of being mounted on or attached to a tractor and which comprises:

a main frame (11) which is securable or attachable to the tractor;

a sub-frame (14) adjustably mounted on the main frame (11) for movement between a bale-wrapping position and a tipped position;

a turntable (16) mounted on the sub-frame (14) and adapted to receive a round bale (18) thereon, said turntable being operative when the sub-frame is in its bale-wrapping position to rotate the bale about its axis, and the turntable itself with the bale thereon also being rotatable about a substantially vertical axis (19);

    means for mounting a film dispenser reel (20) on one of said frames (11, 14), whereby in service film can be withdrawn from the reel to be attached to the bale and upon rotation of the bale about its axis and rotation of the turntable the film can be automatically wrapped around the bale; and,

    a pick-up mechanism (22) mounted on the sub-frame (14) and operative, when the sub-frame is moved to its tipped position, to engage a bale (18) lying on the ground and to move the bale into engagement with the turntable (16) and to hold the bale against the turntable as the sub-frame is moved to its bale-wrapping position.

2. A bale-wrapper apparatus according to Claim 1, in which the pick-up mechanism comprises an arm (23) pivotally mounted on an upstanding portion (25) of the sub-frame (14) and having a transverse bale-engaging member (27) at its free end, the arm (22) being movable between a bale-receiving position and a bale-holding position.

3. A bale wrapper apparatus according to Claim 2, in which the arm (22) is pivotable between its two positions by a ram (26).

4. A bale wrapper apparatus according to Claim 1, in which the pick-up mechanism comprises a cradle (30) which can fit over and around a bale (18), said cradle being pivotally mounted on the sub-frame (14) via an upstanding portion (25) of the sub-frame.

5. A bale wrapper apparatus according Claim 1, in which the main frame (11) is a wheel-supported frame.

6. A bale wrapper apparatus according to Claim 1, in which the main frame (11) has rigid mounting points which enable the main frame to be coupled rigidly to the three point hitch at the rear of a tractor, or to be front-mounted on the tractor.

7. A bale wrapper apparatus according to Claim 1, in which a stand is carried by the main frame (11) for mounting a film dispenser reel (20).

8. A bale wrapper apparatus according to Claim 1, including an automatically acting cutter arrangement provided to cut the length of film running between a wrapped bale and the reel when the sub-frame (14) is tilted.

9. A bale wrapper apparatus according to Claim 1, in which the turntable (16) comprises laterally spaced and parallel rollers (17) onto which a round bale (18) can be supported for rotation, and at least one of the rollers has a brake mechanism operative to brake the roller when the sub-frame (14) is tilted.

10. A bale wrapper apparatus according to Claim 9, in which the turntable (16) has a ring gear drive mechanism (28) operative to rotate the turntable about its vertical axis, and the arrangement is such that the axes of the rollers (17) extend substantially perpendicular to the general longitudinal axis of the tractor when the sub-frame is in a position to pivot in order to load or unload a bale.

11. A bale wrapper apparatus according to Claim 10, including a spring-loaded latch mechanism arranged to engage the ring gear (28) and thereby hold the turntable (16) in a required predetermined attitude about its axis of rotation (19) while the sub-frame (14) is tipped.

12. A bale wrapper apparatus according to Claim 11, including an actuator pad (29) arranged on the main frame (11) to automatically disable the spring-loaded latch mechanism as the sub-frame (14) returns to its bale-receiving position.

**Patentansprüche**

1. Rundballenumwickelvorrichtung (10), die auf einem Traktor befestigt oder daran angehängt werden kann, mit:

    einem Hauptgestell (11), welches am Traktor feststellbar oder anbringbar ist;

    einem Untergestell (14), welches zwischen einer Ballenwickel- und einer Kippstellung verstellbar am Hauptgestell (11) befestigt ist;

    einem auf dem Untergestell (14) befestigten Drehboden (16), der so gestaltet ist, daß er einen Rundballen (18) aufnehmen kann, und der den Ballen um seine eigene Achse dreht, wenn das Untergestell sich in der Ballenwickelstellung befindet, wobei der Drehboden selbst mit dem darauf befindlichen Ballen auch um eine im wesentlichen vertikale Achse (19) drehbar ist;

    einer Einrichtung zur Anbringung einer Folienabwickelspule (20) auf einem der Gestelle (11, 14), wobei im Betrieb Folie von der Spule entnommen und an dem Ballen befestigt werden kann und durch die Drehung des Ballens um seine eigene Achse und die Drehung des Drehbodens die Folie automatisch um den Ballen gewickelt werden kann; und mit

    einem am Untergestell (14) angebrachten Aufnahmemechanismus (22), der einen Ballen (18) vom Boden aufnimmt, wenn das Untergestell sich in Rippstellung befindet, um den Ballen auf den Drehboden (16) zu heben und ihn gegen den Drehboden zu drücken während das Untergestell in die Ballenwickelstellung gebracht wird.

2. Ballenumwicklungsvorrichtung nach Anspruch 1, in der der Aufnahmemechanismus einen Arm (23) aufweist, welcher schwenkbar an einem abgewinkelten Teil (25) des Untergestells (14) befestigt ist und an seinem freien Ende mit einem den Ballen aufnehmenden Querstück (27) versehen ist, wobei der Arm (22) zwischen einer Ballenaufnahme- und einer Ballenhalteposition beweglich ist.

3. Ballenumwicklungsvorrichtung nach Anspruch 2, bei der der Arm (22) durch einen Stößel (26) zwischen seinen beiden Positionen drehbar ist.

4. Ballenumwicklungsvorrichtung nach Anspruch 1, bei der der Aufnahmemechanismus eine Gabel (30) aufweist, die über und um den Ballen (18) fassen kann, wobei die Gabel schwenkbar am Untergestell (14) befestigt ist über ein abgewinkeltes Teil (25) des Untergestells.

5. Ballenumwicklungsvorrichtung nach Anspruch 1, in der das Hauptgestell (11) ein von Rädern getragenes Gestell ist.

6. Ballenumwicklungsvorrichtung nach Anspruch 1, in der das Hauptgestell (11) starre Befestigungspunkte aufweist, wodurch das Hauptgestell starr mit der Dreipunkt-Anhängerkupplung am Heck des Traktors befestigt oder vorne am Traktor angebracht werden kann.

7. Ballenumwicklungsvorrichtung nach Anspruch 1, in der das Hauptgestell (11) eine Halterung zur Aufnahme der Folienabwickelspule (20) aufweist.

8. Ballenumwicklungsvorrichtung nach Anspruch 1 mit einer automatischen Schneidevorrichtung zum Abtrennen der Folienbahn zwischen einem umwickelten Ballen und der Spule, wenn das Untergestell (14) gekippt ist.

9. Ballenumwicklungsvorrichtung nach Anspruch 1, in der der Drehboden (16) seitlich beabstandete, parallele Rollen (18) aufweist, auf denen ein Rundballen (18) gedreht werden kann, wobei mindestens eine der Rollen einen Bremsmechanismus aufweist zum Abbremsen der Rolle, wenn das Untergestell (14) gekippt ist.

10. Ballenumwicklungsvorrichtung nach Anspruch 9, in der der Drehboden (16) einen Drehkranz-Antriebsmechanismus (28) aufweist zum Drehen des Drehbodens um seine vertikale Achse, wobei die Achsen der Rollen (17) sich im wesentlichen senkrecht zur allgemeinen Längsachse des Traktors erstrecken, wenn das Untergestell sich in einer Schwenkstellung zur Aufnahme oder Abgabe eines Ballens befindet.

11. Ballenumwicklungsvorrichtung nach Anspruch 10 mit einem gefederten Schließmechanismus zum Eingriff mit dem Drehkranzgetriebe (28), wodurch der Drehboden (16) in einer bestimmten erforderlichen Stellung um seine Drehachse (19) gehalten wird, während das Untergestell (14) gekippt ist.

12. Ballenumwicklungsvorrichtung nach Anspruch 11 mit einem Verstellknopf (29) auf dem Hauptgestell (11) zum automatischen Entriegeln des gefederten Schließmechanismus, wenn das Untergestell (14) in seine Ballenaufnahmestellung zurückkehrt.

## Revendications

1. Dispositif (10) d'emballage d'une balle ronde qui peut être montée sur ou attachée à un tracteur et qui comprend :

   – un bâti (11) principal qui peut être fixé ou attaché au tracteur ;

   – un bâti secondaire (14) monté de façon réglable sur le bâti principal (11) de façon à être déplaçable entre une position d'emballage de balle et une position basculée ;

   – un plateau tournant (16) monté sur le bâti secondaire (14) et adapté pour recevoir une balle ronde (18) sur lui, le plateau tournant étant opérationnel lorsque le bâti secondaire est dans sa position d'emballage de balle afin de faire tourner la balle autour de son axe, et le plateau tournant lui-même avec la balle sur lui étant aussi rotatif autour d'un axe (19) sensiblement vertical ;

   – des moyens pour monter un dévidoir (20) distributeur de film sur l'un des bâtis (11,14), de telle façon qu'en service le film puisse être retiré du dévidoir pour être attaché à la balle et par rotation de la balle autour de son axe et rotation du plateau tournant le film puisse être automatiquement emballé autour de la balle ; et

   – un mécanisme (22) de ramassage monté sur le bâti secondaire (14) et opérationnel, lorsque le bâti secondaire est déplacé jusqu'à sa position basculée, pour coopérer avec une balle (18) posée sur le sol et pour déplacer la balle pour qu'elle coopère avec le plateau tournant (16) et pour maintenir la balle contre le plateau tournant lorsque le bâti secondaire est déplacé jusqu'à sa position d'emballage de balle.

2. Dispositif d'emballage de balle selon la revendication 1, dans lequel le mécanisme de ramassage comprend un bras (23) monté pivotant sur une partie (25) dressée du bâti secondaire (14) et ayant un élément (27) transversal de coopération avec une balle à son extrémité libre, le bras (23) étant déplaçable entre une position de réception de balle et une position de maintien de balle.

3. Dispositif d'emballage de balle selon la revendication 2, dans lequel le bras (23) peut pivoter entre ces deux positions grâce à un piston (26).

4. Dispositif d'emballage de balle selon la revendication 1, dans lequel le mécanisme de ramassage comprend un berceau (30) qui peut s'ajuster au-dessus et autour de la balle (18), le berceau étant monté pivotant sur le bâti secondaire (14) par l'intermédiaire d'une partie (25) dressée du bâti secondaire.

5. Dispositif d'emballage de balle selon la revendication 1, dans lequel le cadre (11) principal est un cadre supporté par roue.

6. Dispositif d'emballage de balle selon la revendication 1, dans lequel le cadre (11) principal a des points de montage rigides qui permettent au cadre principal d'être couplé rigidement avec trois points d'attelage à l'arrière du tracteur, ou d'être monté de front sur le tracteur.

7. Dispositif d'emballage de balle selon la revendication 1, dans lequel un support est porté par le cadre principal (11) pour le montage d'un dévidoir (20) distributeur de film.

8. Dispositif d'emballage d'une balle selon la revendication 1, comprenant un agencement de coupe agissant automatiquement prévu pour couper la longueur du film s'étendant entre une balle emballée et le dévidoir lorsque le bâti secondaire (14) est incliné.

9. Dispositif d'emballage de balle selon la revendication 1, dans lequel le plateau tournant (16) comprend des rouleaux (17) espacés latéralement et parallèles sur lesquels une balle ronde (18) peut être supportée de façon à être rotative, et au moins un des rouleaux a un mécanisme de freinage opérationnel de façon à freiner le rouleau lorsque le cadre secondaire (14) est basculé.

10. Dispositif d'emballage de balle selon la revendication 9, dans lequel le plateau tournant (16) comporte un mécanisme (28) à couronne dentée opérationnel de façon à tourner le plateau tournant autour de son axe vertical, et l'agencement est tel que les axes des rouleaux (17) s'étendent sensiblement perpendiculairement à l'axe longitudinal général du tracteur lorsque le bâti secondaire est dans une position de pivotement de façon à charger ou à décharger une balle.

11. Dispositif d'emballage de balle selon la revendication 10, comprenant un mécanisme de verrouillage chargé par ressort agencé de façon à coopérer avec la couronne dentée (28) et de cette façon maintenir le plateau tournant (16) dans une configuration prédéterminée requise autour de son axe de rotation (19) tandis que le bâti (14) secondaire est basculé.

12. Dispositif d'emballage de balle selon la revendication 11, comprenant une plaquette (29) d'actionnement agencée sur le cadre principal (11) pour désengager automatiquement le mécanisme de verrouillage chargé par ressort lorsque le bâti secondaire (14) revient à sa position de réception de balle.

FIG. 2

FIG. 4

FIG. 1

FIG. 3

FIG. 5

FIG. 6

FIG. 7

FIG. 8

31

FIG. 9

31

FIG. 10